# EUROPÄISCHE PATENTANMELDUNG

(11) **EP 4 512 641 A1**
(43) Veröffentlichungstag der Anmeldung: **26.02.2025**
(21) Anmeldenummer: 24195896.6
(22) Anmeldetag: 22.08.2024
(51) Int. Cl.: B60D 1/36, B60D 1/62, B62D 59/04

(54) **VERFAHREN ZUM BETREIBEN EINES HILFSANTRIEBS EINES ANHÄNGERS**

(30) Priorität: 25.08.2023 DE 102023122826
(71) Anmelder: Reich Gesellschaft mbH Regel- und Sicherheitstechnik, 35713 Eschenburg (DE)
(72) Erfinder: ZIPPERLE, Timo, 91091 Großsenseebach (DE); NEUREUTHER, Julian, 92348 Berg (DE); SOLLNER, Korbinian, 91054 Erlangen (DE); GRÄF, Florian, 91052 Erlangen (DE); BENDER, Steffen, 35713 Eschenburg (DE); SCHAURER, Oliver, 85445 Oberding (DE)
(74) Vertreter: Hofstetter, Schurack & Partner

(57) **Zusammenfassung**

Die Erfindung betrifft ein Verfahren zum Betreiben eines Hilfsantriebs (12) eines Anhängers (10), bei welchem mittels wenigstens einer Kamera (46) wenigstens ein Bild (54) einer in einer Umgebung (48) des Anhängers (10) angeordneten Markierung (50) eines in der Umgebung (48) des Anhängers (10) angeordneten Zugfahrzeugs (22) erfasst wird. Mittels einer elektronischen Recheneinrichtung (52) wird das Bild (54) analysiert und dadurch die Markierung (50) erkannt. Mittels der elektronischen Recheneinrichtung (52) wird der Hilfsantrieb (12) in Abhängigkeit von der durch das Analysieren des Bilds (54) erkannten Markierung (50) angesteuert, wodurch der Hilfsantrieb (12) Fahrzeugräder (30, 32) des Anhängers (10) derart antreibt, dass der Anhänger (10) relativ zu dem Zugfahrzeug (22) gefahren wird, wodurch ein Abstand zwischen einer ersten Koppeleinrichtung (18) des Anhängers (10) und einer zweiten Koppeleinrichtung (20) des Zugfahrzeugs (22) zumindest reduziert wird.

## Beschreibung

Die Erfindung betrifft ein Verfahren zum Betreiben eines Hilfsantriebs eines Anhängers, insbesondere eines Wohnwagens, eines Caravans, eines Bootsanhängers, eines Verkaufswagens, eines Transportanhängers oder eines Autotransportanhängers.

Die DE 10 2016 116 043 A1 offenbart ein Transportfahrzeug, mit einer einen Ladebehälter aufweisenden Ladebehälteranordnung, welche einen Einfüllbereich zum Befüllen des Ladebehälters mit Erntegut durch eine Erntemaschine oder Verlademaschine in einem Überladevorgang aufweist. Der DE 10 2016 210 376 A1 ist ein Verfahren zum autonomen Ausrichten einer an einem Heck eines Zugfahrzeugs angebrachten Zugkugel mit einer an einem Anhänger angebrachten Zugdeichsel als bekannt zu entnehmen. Aus der DE 10 2016 210 824 A1 ist ein Verfahren zur Hilfestellung bei einer Ausrichtung einer Anhängerzugkugel an ein Zugfahrzeug mit einer sich auf einem Zugfahrzeug befindlichen Zugdeichsel während eines Anhängeprozesses bekannt. Darüber hinaus offenbart die DE 10 2016 211 396 A1 eine Anordnung, mit einer ersten Kamera, einem ersten Muster, mindestens einer Auswerteeinheit und mindestens einem Mittel zur Übertragung mindestens eines Bildes von der ersten Kamera zu der Auswerteeinheit. Ferner ist der US 2019/0315236 A1 ein Verfahren zum Laden eines Elektrofahrzeugs als bekannt zu entnehmen.

Aufgabe der vorliegenden Erfindung ist es, ein Verfahren zu schaffen, so dass ein Anhänger auf besonders vorteilhafte Weise mit einem Zugfahrzeug gekoppelt werden kann.

Diese Aufgabe wird erfindungsgemäß durch ein Verfahren mit den Merkmalen des Patentanspruchs 1 gelöst.

Vorteilhafte Ausgestaltungen mit zweckmäßigen Weiterbildungen der Erfindung sind in den übrigen Ansprüchen angegeben.

Die Erfindung betrifft ein Verfahren zum Betreiben eines Hilfsantriebs eines Anhängers. Der Anhänger ist ein Landfahrzeug. Der Anhänger weist wenigstens oder genau eine einfach auch als Achse bezeichnete Fahrzeugachse auf. Die Fahrzeugachse weist wenigstens oder genau zwei einfach als Räder bezeichnete Fahrzeugräder auf, wobei die Fahrzeugräder der Fahrzeugachse auf in Fahrzeugquerrichtung des Anhängers an einander gegenüberliegenden Seiten des Anhängers angeordnet sind. Die Fahrzeugräder sind Bodenkontaktelemente des Anhängers, welcher in Fahrzeughochrichtung des Anhängers nach unten hin über die Bodenkontaktelemente an einem Boden abstützbar oder abgestützt ist. Wird der Anhänger entlang des Bodens gefahren, während der Anhänger in Fahrzeughochrichtung des Anhängers nach unten hin über die Bodenkontaktelemente an dem Boden abgestützt ist, so rollen die Bodenkontaktelemente, insbesondere direkt, an dem Boden ab.

Bei dem Verfahren wird mittels wenigstens einer Kamera wenigstens ein Bild einer in einer Umgebung des Anhängers angeordneten Markierung eines in der Umgebung des Anhängers angeordneten Zugfahrzeugs erfasst, insbesondere während das Zugfahrzeug von dem Anhänger entkoppelt und insbesondere vollständig von dem Anhänger beabstandet ist. Vorzugsweise handelt es sich bei der Markierung des Zugfahrzeugs um ein Kennzeichen des Zugfahrzeugs.

Bei dem Verfahren wird mittels einer elektronischen Recheneinrichtung das Bild analysiert und dadurch die Markierung, insbesondere das Kennzeichen, des Zugfahrzeugs erkannt. Mittels der elektronischen Recheneinrichtung wird der Hilfsantrieb in Abhängigkeit von der durch das Analysieren des Bildes erkannten Markierung, insbesondere automatisch, angesteuert, wodurch der Hilfsantrieb die Fahrzeugräder des Anhängers und dadurch den Anhänger, insbesondere automatisch, derart antreibt, dass der Anhänger relativ zu dem Zugfahrzeug, insbesondere entlang des Bodens und ganz insbesondere, während der Anhänger über seine Bodenkontaktelemente in Fahrzeughochrichtung des Anhängers nach unten hin an dem Boden abgestützt ist, gefahren wird, wodurch, insbesondere automatisch, ein Abstand zwischen einer ersten Koppeleinrichtung des Anhängers und einer zweiten Koppeleinrichtung des Zugfahrzeugs zumindest reduziert, das heißt reduziert oder aufgehoben wird. Möglich ist beispielsweise, dass mittels der elektronischen Recheneinrichtung der Hilfsantrieb in Abhängigkeit von der durch das Analysieren des Bildes erkannten Markierung, insbesondere automatisch, angesteuert wird, wodurch der Hilfsantrieb die Fahrzeugräder des Anhängers und dadurch den Anhänger, insbesondere automatisch, derart antreibt, dass der Anhänger relativ zu dem Zugfahrzeug, insbesondere entlang des Bodens und ganz insbesondere, während der Anhänger über seine Bodenkontaktelemente in Fahrzeughochrichtung des Anhängers nach unten hin an dem Boden abgestützt ist, gefahren wird, wodurch die erste Koppeleinrichtung des Anhängers gelenkig mit der zweiten Koppeleinrichtung des Zugfahrzeugs gekoppelt wird.

Das erfindungsgemäße Verfahren ermöglicht eine besonders einfache und komfortable Kopplung der ersten Koppeleinrichtung und somit des Anhängers mit der zweiten Koppeleinrichtung und somit mit dem Zugfahrzeug, da mittels des Verfahrens der zunächst gegenüber Null größere Abstand zwischen den Koppeleinrichtung reduziert oder aufgehoben wird, insbesondere, ohne dass eine Person den Hilfsantrieb bedienen muss. Dadurch, dass bei dem erfindungsgemäßen Verfahren das vorzugsweise automatische, das heißt vorzugsweise automatisch durchgeführte, Fahren des Anhängers und dadurch das, insbesondere automatische, Verringern oder Aufheben des Abstands zwischen den Koppeleinrichtungen von der beispielsweise als Kennzeichen oder Nummernschild ausgebildeten Markierung und insbesondere deren Erkennung abhängt, kann sichergestellt werden, dass mittels des Verfahrens der Anhänger, insbesondere nur, in Richtung des gewünschten Zugfahrzeugs nicht unerwünschterweise in Richtung eines anderen Zugfahrzeugs gefahren wird.

Um dabei sicherzustellen, dass eine unerwünschte Kopplung des Anhängers mit einem von dem Zugfahrzeug unterschiedlichen Fahrzeug beziehungsweise ein insbesondere automatisches Fahren des Anhängers in Richtung eines anderen, von dem Zugfahrzeugs unterschiedlichen Fahrzeugs unterbleibt, ist es bei einer Ausführungsform der Erfindung vorgesehen, dass die elektronische Recheneinrichtung die erkannte Markierung, insbeonsdere das erkannte Kennzeichen, als Ist-Markierung, insbesondere als Ist-Kennzeichen, mit einer vorgegebenen Referenz-Markierung, insbesondere mit einem vorgegebenen Referenz-Kennzeichen, vergleicht, wobei die Referenz-Markierung beispielsweise in einem insbesondere elektrischen oder elektronischen Datenspeicher der elektronischen Recheneinrichtung gespeichert ist. Dabei steuert die elektronische Recheneinrichtung den Hilfsantrieb in Abhängigkeit von dem Vergleich der Ist-Markierung mit der Referenz-Markierung an, wodurch der Hilfsantrieb die Fahrzeugräder, insbesondere automatisch, derart antreibt, dass der Anhänger relativ zum Zugfahrzeug, insbesondere automatisch, gefahren und hierdurch der Abstand zwischen den Koppeleinrichtungen, insbesondere automatisch, zumindest reduziert, das heißt automatisch zumindest verringert wird.

Dabei hat es sich als besonders vorteilhaft gezeigt, wenn die elektronische Recheneinrichtung die Referenz-Markierung in Abhängigkeit von einer durch eine Person bewirkten Eingabe ermittelt und hierbei beispielsweise im Datenspeicher speichert. Die Person kann die Eingabe beispielsweise über eine Eingabeeinrichtung vornehmen, wodurch die Person die Ist-Markierung vorgeben kann. Hierdurch kann die Person beispielsweise sicherstellen, dass durch das Verfahren der Anhänger, insbesondere automatisch, nur in Richtung des von der Person gewünschten Zugfahrzeugs gefahren wird. Außerdem kann hierdurch eine besonders einfache, insbesondere automatische, Kopplung des Anhängers mit dem Zugfahrzeug gewährleistet werden. Ist beispielsweise das Zugfahrzeug insbesondere in einer Reihe mit anderen Fahrzeugen geparkt, wobei also die anderen Fahrzeuge andere Markierungen, insbesondere Kennzeichen, aufweisen, so kann die Person durch Vorgeben der Markierung auf besonders einfache Weise sicherstellen, dass das Verfahren den Anhänger, insbesondere automatisch, nur in Richtung des Zugfahrzeugs fährt, welches die Ist-Markierung aufweist. Hierdurch kann sozusagen die Person aus einer das Zugfahrzeug und die anderen Fahrzeuge umfassenden Menge von Fahrzeugen das Zugfahrzeug ausgeben und/oder vorgeben, so dass das Verfahren den Anhänger sicher in Richtung des Zugfahrzeugs und nicht in Richtung eines anderen Fahrzeugs, insbesondere automatisch, fährt.

Somit hat es sich als besonders vorteilhaft gezeigt, wenn dann und nur dann mittels der elektronischen Recheneinrichtung der Hilfsantrieb in Abhängigkeit von der erkannten Markierung derart angesteuert wird, dass der Hilfsantrieb die Fahrzeugräder des Anhängers, insbesondere automatisch, derart antreibt, dass der Anhänger relativ zu dem Zugfahrzeug, insbesondere automatisch, gefahren wird, um dadurch, insbesondere automatisch, den Abstand zwischen den Koppeleinrichtungen zumindest zu reduzieren, wenn die elektronische Recheneinrichtung durch den Vergleich der Ist-Markierung mit der Referenz-Markierung ermittelt, dass die Ist-Markierung mit der Referenz-Markierung übereinstimmt, und dass vorzugsweise ansonsten ein, insbesondere automatisches, Antreiben der Fahrzeugräder durch den Hilfsantrieb unterbleibt. Somit kann sichergestellt werden, dass durch das Verfahren der Anhänger dann und nur dann angetrieben wird, wenn die Ist-Markierung erfasst und erkannt wird, so dass sichergestellt werden kann, dass ein unerwünschtes Fahren des Anhängers in Richtung eines anderen Fahrzeugs unterbleibt. Hierdurch kann eine besonders sichere und präzise sowie komfortable Koppelung des Anhängers mit dem Zugfahrzeug gewährleistet werden.

Bei einer besonders vorteilhaften Ausführungsform der Erfindung wird als die elektronische Recheneinrichtung eine elektronische Recheneinrichtung des Anhängers verwendet. Dadurch kann das Verfahren besonders sicher und schnell durchgeführt werden.

Eine weitere Ausführungsform zeichnet sich dadurch aus, dass als die Kamera eine Kamera des Anhängers verwendet wird, wodurch das Verfahren schnell, einfach und sicher durchgeführt werden kann.

Um den Anhänger vorzugsweise automatisch sowie besonders einfach in Richtung des vorzugsweise als Kraftfahrzeug ausgebildeten Zugfahrzeugs fahren zu können, ist es in weiterer Ausgestaltung der Erfindung vorgesehen, dass als die Markierung, das heißt als das zuvor genannte Kennzeichen ein Kennzeichen verwendet wird, welches eine von einer Fahrzeug-Zulassungsbehörde eines Staates zugeteilte individuelle, insbesondere numerische oder alphanumerische, Registrierungsbezeichnung wiedergibt, d. h. anzeigt. Somit ist die Markierung nicht eine speziell für das Koppeln des Anhängers mit dem Zugfahrzeug vorgesehene, an dem Zugfahrzeug angebrachte Markierung, sondern das Zugfahrzeug, welches als Kraftfahrzeug ausgebildet ist, weist das Kennzeichen und somit die Markierung ohnehin auf, um auf Straßen und somit im öffentlichen Straßenverkehr gefahren und somit verwendet werden zu dürfen. Dadurch kann beispielsweise die Person das Zugfahrzeug einfach vorgeben, und insbesondere ist es möglich, dass die Person aus mehreren Fahrzeugen, insbesondere genau, eines der Fahrzeuge als das Zugfahrzeug auswählt, indem die Person das Kennzeichen des ausgewählten Zugfahrzeugs mittels der Eingabe eingibt und somit vorgibt. Dadurch ist eine einfache, zeitgünstige und besonders komfortable, insbesondere automatische, Kopplung des Anhängers mit dem Zugfahrzeug darstellbar.

Eine weitere Ausführungsform zeichnet sich dadurch aus, dass während mittels der elektronischen Recheneinrichtung der Hilfsantrieb in Abhängigkeit von der erkannten Markierung derart angesteuert wird, dass der Hilfsantrieb die Fahrzeugräder des Anhängers, insbesondere automatisch, derart antreibt, dass der Anhänger relativ zu dem Zugfahrzeug, insbesondere automatisch, gefahren wird, um dadurch, insbesondere automatisch, den Abstand zwischen den Koppeleinrichtungen zumindest zu reduzieren, mittels der Kamera und/oder mittels wenigstens eines weiteren Umgebungssensors zumindest ein in der Umgebung des Anhängers angeordnetes, von dem Zugfahrzeug unterschiedliches und zusätzlich zu dem Zugfahrzeug vorgesehenes Objekt erfasst wird, wobei die elektronische Recheneinrichtung den Hilfsantrieb auch in Abhängigkeit von dem erfassten Objekt ansteuert, um eine Kollision des Anhängers mit dem Objekt zu vermeiden. Dadurch kann der Anhänger besonders sicher und vorzugsweise automatisch mit dem Zugfahrzeug gekoppelt werden.

Eine weitere Ausführungsform zeichnet sich dadurch aus, dass mittels der elektronischen Recheneinrichtung der Hilfsantrieb in Abhängigkeit von der erkannten Markierung derart angesteuert wird, dass der Hilfsantrieb die Fahrzeugräder des Anhängers, insbesondere automatisch, derart antreibt, dass der Anhänger relativ zu dem Zugfahrzeug automatisch gefahren wird, um dadurch, insbesondere automatisch, den Abstand zwischen den Koppeleinrichtungen zumindest zu reduzieren, ohne dass das Ansteuern des Anhängers von einem zusätzlichen, leitungslos von dem Anhänger empfangenen Signal abhängt. Somit sind keine zusätzlichen Ansteuersignale erforderlich, sondern das Verfahren und somit der Hilfsantrieb fahren den Anhänger, insbesondere automatisch, nur in Abhängigkeit von der vorzugsweise als Kennzeichen ausgebildeten und daher auch als Nummernschild oder Kfz-Kennzeichen bezeichneten Markierung, wodurch der Anhänger besonders einfach und komfortabel mit dem Zugfahrzeug gekoppelt werden kann.

Schließlich hat es sich als besonders vorteilhaft gezeigt, wenn durch das vorzugsweise automatische und relativ zu dem Zugfahrzeug erfolgenden Fahren des Anhängers der Abstand zwischen der ersten Koppeleinrichtung und der zweiten Koppeleinrichtung derart zumindest reduziert wird, dass nach dem vorzugsweise automatischen und relativ zu dem Zugfahrzeug erfolgenden Fahren des Anhängers die zweite Koppeleinrichtung in zumindest oder genaue eine Raumrichtung durch die erste Koppeleinrichtung überlappt ist. Beispielsweise verläuft die zumindest oder genau eine Raumrichtung in vertikaler Richtung nach oben. Daraufhin kann beispielsweise die eigentliche, gelenkige Kopplung der ersten Koppeleinrichtung mit der zweiten Koppeleinrichtung manuell erfolgen, insbesondere derart, dass eine Person manuell ein beispielsweise als Bugrad ausgebildetes und insbesondere an dem Fahrgestell gehaltenes Stützrad des Anhängers auf das Fahrgestell zubewegt, insbesondere derart, dass das Stützrad in die zumindest oder genau eine Raumrichtung relativ zu dem Fahrgestell bewegt wird. Hierdurch wird die erste Koppeleinrichtung des Anhängers beispielsweise auf die zweite Koppeleinrichtung des Zugfahrzeugs zubewegt, beispielsweise derart, dass die erste Koppeleinrichtung des Anhängers in eine der zumindest oder genau einen Raumrichtung entgegengesetzte Bewegungsrichtung relativ zu der zweiten Koppeleinrichtung des Zugfahrzeugs bewegt wird. Insbesondere wird somit die erste Koppeleinrichtung des Anhängers in vertikaler Richtung nach unten bewegt, mithin abgesenkt. Durch das relativ zu dem Fahrgestell erfolgende Bewegen des Stützrads in Richtung des Fahrgestells und das daraus resultierende, relativ zu der zweiten Koppeleinrichtung des Zugfahrzeugs erfolgende Bewegen der ersten Koppeleinrichtung des Anhängers wird beispielsweise zumindest ein erster Teilbereich der zweiten Koppeleinrichtung des Zugfahrzeugs, insbesondere ein Kugelkopf der zweiten Koppeleinrichtung des Zugfahrzeugs, in einen korrespondieren, zweiten Teilbereich der ersten Koppeleinrichtung des Anhängers, insbesondere in eine korrespondierende Kugelpfanne der ersten Koppeleinrichtung des Anhängers, hineinbewegt, wodurch die Koppeleinrichtungen gelenkig miteinander gekoppelt werden. Insbesondere wird hierdurch und beispielsweise erst hierdurch der Abstand zwischen den Koppeleinrichtung vollständig aufgehoben. Nachdem beispielsweise der erste Teilbereich in den zweiten Teilbereich hineinbewegt wurde, können die Koppeleinrichtungen miteinander verriegelt werden, was beispielsweise manuell erfolgen kann. Grundsätzlich wäre es natürlich denkbar, dass das Bewegen des Stützrads in Richtung des Fahrgestells, mithin das Absenken der ersten Koppeleinrichtung, insbesondere der Kugelpfanne, in Richtung der zweiten Koppeleinrichtung, insbesondere der Kugelpfanne, automatisch erfolgt, sodass insbesondere vorgesehen sein kann, dass bei dem Verfahren die Koppeleinrichtungen automatisch miteinander gekoppelt werden.

Insbesondere ist erkennbar, dass die Koppeleinrichtung mittels eines oder bei einem Koppelvorgang gelenkig miteinander gekoppelt werden können, wobei der Koppelvorgang umfasst, dass der Abstand zwischen den Koppeleinrichtungen zumindest reduziert wird. Der Koppelvorgang umfasst auch, dass der erste Teilbereich, insbesondere der Kugelkopf, in den zweiten Teilbereich, insbesondere die Kugelpfanne, hineinbewegt wird, wodurch die Koppeleinrichtungen gelenkig miteinander gekoppelt werden. Somit ist erkennbar, dass durch das Verfahren zumindest ein Teil des Koppelvorgangs automatisch durchgeführt wird, nämlich das Reduzieren des Abstands zwischen den Koppeleinrichtungen. Das darauffolgende Hineinbewegen des ersten Teilbereiches in den zweiten Teilbereich kann auch automatisch durchgeführt werden, oder das Hineinbewegen des ersten Teilbereiches in den zweiten Teilbereich kann manuell von einer Person durchgeführt werden.

Das zuvor beschriebene Ansteuern des Hilfsantriebs mittels der elektronischen Recheneinrichtung in Abhängigkeit von der erkannten Markierung und das hierdurch bewirkte Antreiben der Fahrzeugräder mittels des Hilfsantriebs und das dadurch bewirkte und relativ zu dem Zugfahrzeug erfolgende Fahren des Anhängers und das hieraus resultierende Reduzieren des Abstands zwischen den Koppeleinrichtungen kann automatisch erfolgen, insbesondere mit der Ausnahme oder unter der Voraussetzung, dass die Person wenigstens oder genau ein Bedienelement, insbesondere durchgängig, das heißt unterbrechungsfrei bedient. Mit anderen Worten, vorzugsweise ist es vorgesehen, dass mittels der elektronischen Recheneinrichtung der Hilfsantrieb in Abhängigkeit von der durch das Analysieren des Bilds erkannten Markierung derart angesteuert wird, dass der Hilfsantrieb die Fahrzeugräder des Anhängers solange und vorzugsweise nur so lange, wie die Person wenigstens oder genau ein Bedienelement bedient, derart automatisch antreibt, dass der Anhänger relativ zu dem Zugfahrzeug automatisch gefahren wird, wodurch der Abstand zwischen der ersten Koppeleinrichtung des Anhängers und der zweiten Koppeleinrichtung des Zugfahrzeugs zumindest reduziert wird. Sobald die Person das Bedienen des Bedienelements beendet, werden auch das Antreiben der Fahrzeugräder und somit das Fahren des Anhängers beendet. Hierdurch kann ein besonders sicheres Koppeln der Koppeleinrichtungen gewährleistet werden.

Das Bedienelement wird beispielsweise von einem insbesondere mobilen Bediengerät bereitgestellt, welches beispielsweise ein mobiles Endgerät, insbesondere ein mobiles Telekommunikationsendgerät wie beispielsweise ein Handy oder ein Smartphone ist. Bei dem Bedienelement handelt es sich beispielsweise um ein körperliches Bedienelement, welches beispielsweise relativ zu einem Grundkörper des Bediengeräts bewegbar ist. Ferner ist es denkbar, dass es sich bei dem Bedienelement um eine berührungsempfindlichen Oberfläche handelt, die beispielsweise durch einen berührungsempfindlichen Bildschirm des Bediengeräts bereitgestellt wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines Anhängers;
- Fig. 2: ausschnittsweise eine schematische Seitenansicht des Anhängers;
- Fig. 3: eine schematische Darstellung eines Bilds eines Kennzeichens.

In den Figuren sind gleiche oder funktionsgleiche Elemente mit gleichen Bezugszeichen versehen.

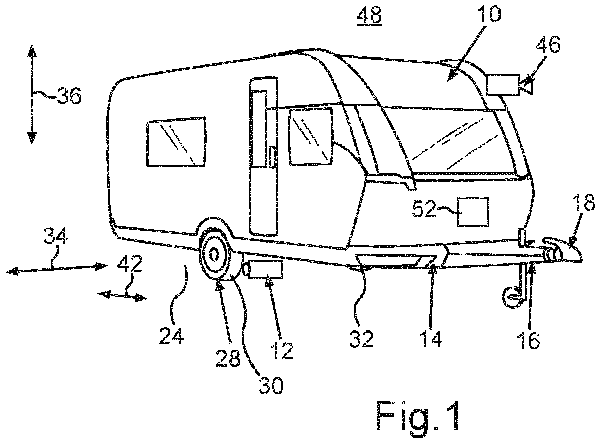

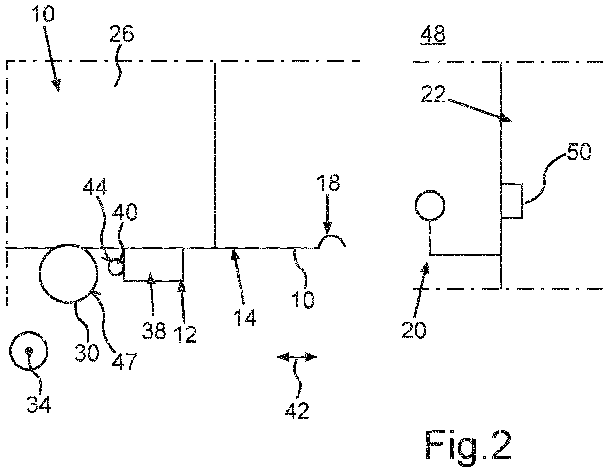

Fig. 1 zeigt in einer schematischen Perspektivansicht einen Anhänger 10, welcher bei dem in Fig. 1 gezeigten Ausführungsbeispiel als ein Wohnwagen ausgebildet ist. Der Wohnwagen wird auch als Caravan bezeichnet. Im Folgenden wird anhand von Fig. 1 bis 3 ein Verfahren zum Betreiben eines Hilfsantriebs 12 des Anhängers 10 beschrieben. Der Anhänger 10 weist ein Fahrgestell 14 und eine an dem Fahrgestell 14 vorgesehene Deichsel 16 auf, an welcher eine erste Koppeleinrichtung 18 angeordnet ist. Bei dem in Fig. 1 gezeigten Ausführungsbeispiel ist die erste Koppeleinrichtung 18 als eine Kugelkupplung ausgebildet, welche auch als Kugelkopfkupplung bezeichnet wird. Die erste Koppeleinrichtung 18 kann gelenkig sowie vorzugsweise zerstörungsfrei lösbar mit einer in Fig. 2 besonders schematisch dargestellten, zweiten Koppeleinrichtung 20 eines Zugfahrzeugs 22 gekoppelt werden, wobei das Zugfahrzeug 22 ein beispielsweise als Kraftwagen, insbesondere als Personenkraftwagen, ausgebildetes Kraftfahrzeug ist. In einem Zustand, in welchem die Koppeleinrichtung 18 und somit der Anhänger 10 gelenkig mit der Koppeleinrichtung 20 und somit dem Zugfahrzeug 22 gekoppelt sind, kann das Zugfahrzeug 22 den Anhänger 10 ziehen und/oder schieben und hierdurch beispielsweise entlang eines Bodens 24 fahren.

Bei dem in den Figuren gezeigten Ausführungsbeispiel weist der Anhänger 10 einen separat von dem Fahrgestell 14 ausgebildeten und an dem Fahrgestell 14 gehaltenen Aufbau 26 auf, durch welchen ein Innenraum für Personen gebildet ist. Der Anhänger 10 weist außerdem wenigstens oder vorliegend genau eine einfach auch als Achse bezeichnete Fahrzeugachse 28 auf, welche wenigstens oder vorliegend genau zwei Fahrzeugräder aufweist, nämlich ein erstes Fahrzeugrad 30 und ein zweites Fahrzeugrad 32. Die Fahrzeugräder 30 und 32 sind auf in Fahrzeugquerrichtung des Anhängers 10 einander gegenüberliegenden Seiten des Anhängers 10 angeordnet, wobei die Fahrzeugquerrichtung des Anhängers 10 durch einen Doppelpfeil 34 veranschaulicht ist. Die Fahrzeugräder 30 und 32 sind Bodenkontaktelemente des Anhängers 10, welcher in Fahrzeughochrichtung des Anhängers 10 nach unten hin über die Bodenkontaktelemente (Fahrzeugräder 30 und 32) an dem Boden 24 abstützbar oder abgestützt ist. Die Fahrzeughochrichtung des Anhängers 10 ist durch einen Doppelpfeil 36 veranschaulicht. Wird der Anhänger 10 entlang des Bodens 24 gefahren, während der Anhänger 10 in Fahrzeughochrichtung des Anhängers 10 nach unten hin über die Fahrzeugräder 30 und 32 an dem Boden 24 abgestützt ist, so rollen die Fahrzeugräder 30 und 32, insbesondere direkt, an dem Boden 24 ab. Wie am Beispiel des Fahrzeugrads 30 erkennbar ist, ist dem jeweiligen Fahrzeugrad 30, 32 der Fahrzeugachse 28 ein jeweiliger Elektromotor 38 des Hilfsantriebs 12 zugeordnet. Das jeweilige Fahrzeugrad 30, 32 ist mittels des dem Fahrzeugrad 30, 32 zugeordneten Elektromotors 38 antreibbar, insbesondere unter Vermittlung einer jeweiligen Antriebsrolle 40. Die jeweilige, auch als Walze, Antriebswalze oder Rolle bezeichnete Antriebsrolle 40 ist in Fahrzeuglängsrichtung des Anhängers 10 relativ zu dem Fahrgestell 14 und relativ zu dem Fahrzeugrad 30, 32 translatorisch bewegbar, wobei die Fahrzeuglängsrichtung des Anhängers 10 durch einen Doppelpfeil 42 veranschaulicht ist. Die jeweilige Antriebsrolle 40 kann relativ zu dem Fahrgestell 14 und relativ zu dem jeweiligen Fahrzeugrad 30, 32 in Fahrzeuglängsrichtung des Anhängers 10 zwischen einer jeweiligen Ruhestellung und wenigstens einer jeweiligen Antriebsstellung, insbesondere translatorisch, bewegt werden. Die jeweilige Ruhestellung wird auch als jeweilige Ausgangsstellung bezeichnet. In der jeweiligen Ruhestellung ist die jeweilige Antriebsrolle 40 von dem jeweiligen, zugeordneten Fahrzeugrad 30, 32, insbesondere vollständig, beabstandet. In der jeweiligen Antriebsstellung liegt die jeweilige Antriebsrolle 40, insbesondere eine jeweilige, außenumfangsseitige Mantelfläche 44 der jeweiligen Antriebsrolle 40, insbesondere direkt, an dem Fahrzeugrad 30, 32, dem die jeweilige Antriebsrolle 40 zugeordnet ist, an. Insbesondere liegt die jeweilige Antriebsrolle 40 in der jeweiligen Antriebsstellung, insbesondere direkt, an einer jeweiligen Lauffläche 47 des jeweiligen Fahrzeugrads 30, 32, dem die jeweilige Antriebsrolle 40 zugeordnet ist, insbesondere direkt, an, wobei das jeweilige Fahrzeugrad 30, 32 in Fahrzeughochrichtung des Anhängers 10 nach unten hin, insbesondere direkt, an dem Boden 24 abstützbar oder abgestützt ist. Wird der Anhänger 10 entlang des Bodens 24 gefahren, während der Anhänger 10 in Fahrzeughochrichtung des Anhängers 10 nach unten hin über die Fahrzeugräder 30 und 32 an dem Boden 24 abgestützt ist, so rollen die Laufflächen der Fahrzeugräder 30 und 32, insbesondere direkt, an dem Boden 24 ab. Wird die jeweilige Antriebsrolle 40 mittels des jeweiligen Elektromotors 38 angetrieben, während sich die jeweilige Antriebsrolle 40 in ihrer jeweiligen Antriebsstellung befindet, so treibt hierdurch die jeweilige Antriebsrolle 40 das jeweilige, zugeordnete Fahrzeugrad 30, 32 an, wodurch der Anhänger 10 relativ zu dem Boden 24 und entlang des Bodens 24 gefahren werden kann, ohne dass der Anhänger 10 mit dem Zugfahrzeug 22 oder einem anderen Zugfahrzeug gekoppelt ist.

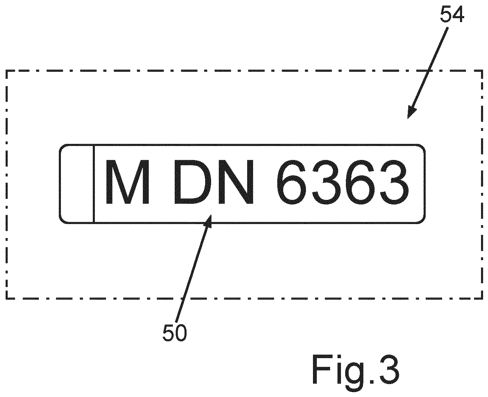

Um nun den zunächst von dem Zugfahrzeug 22 und somit von der Koppeleinrichtung 20 des Zugfahrzeugs 22, dessen Koppeleinrichtung 20 auch als Anhängerkupplung bezeichnet wird und beispielsweise als Kugelkopf ausgebildet ist, entkoppelten Anhänger 10 mit dem Zugfahrzeug 22, d. h. mit der Koppeleinrichtung 20, besonders einfach und komfortabel gelenkig zu koppeln, wird bei dem Verfahren mittels wenigstens oder genau einer Kamera 46 des Anhängers 10 wenigstens ein Bild einer in einer Umgebung 48 des Anhängers 10 angeordneten und als Kennzeichen 50 ausgebildeten Markierung des Zugfahrzeugs 22 erfasst. Mittels einer in Fig. 1 besonders schematisch dargestellten, elektronischen Recheneinrichtung 52 des Anhängers 10 wird das mittels der Kamera 46 erfasste Bild analysiert, wodurch mittels der elektronischen Recheneinrichtung 52 das Kennzeichen 50 in dem Bild erkannt wird. Das mittels der Kamera 46 erfasste Bild ist in Fig. 3 schematisch dargestellt und mit 54 bezeichnet, wobei in Fig. 3 das Kennzeichen 50 in dem Bild 54 erkennbar ist. Mittels der elektronischen Recheneinrichtung 52 wird der Hilfsantrieb 12 in Abhängigkeit von dem durch das Analysieren des Bilds 54 erkannten Kennzeichen 50 angesteuert und dadurch betrieben, wodurch der Hilfsantrieb 12 die Fahrzeugräder 30 und 32 des Anhängers 10, insbesondere automatisch, derart antreibt, dass der Anhänger 10 relativ zu dem Zugfahrzeug 22, insbesondere in Richtung des Zugfahrzeugs 22, vorzugsweise automatisch gefahren wird, wodurch, insbesondere automatisch, ein Abstand zwischen der ersten Koppeleinrichtung 18 des Anhängers 10 und der zweiten Koppeleinrichtung 20 des Zugfahrzeugs 22 zumindest reduziert, das heißt verringert oder aufgehoben wird.

Vorzugsweise ist es vorgesehen, dass mittels der elektronischen Recheneinrichtung 52 der Hilfsantrieb 12 in Abhängigkeit von dem durch das Analysieren des Bilds 54 erkannten Kennzeichen 50 derart angesteuert und dadurch betrieben wird, dass der Hilfsantrieb 12 die Fahrzeugräder 30 und 32 des Anhängers 10 so lange und vorzugsweise nur so lange, wie eine Person wenigstens oder genau ein Bedienelement, insbesondere manuell, bedient, derart antreibt, dass der Anhänger 10 relativ zu dem Zugfahrzeug 22 gefahren wird, wodurch der Abstand zwischen der ersten Koppeleinrichtung 18 des Anhängers 10 und der zweiten Koppeleinrichtung 20 des Zugfahrzeugs 22 zumindest reduziert wird. Somit ist es vorzugsweise vorgesehen, dass mit Ausnahme des Bedienens des Bedienelements durch die Person das von dem erkannten Kennzeichen 50 abhängige Ansteuern des Hilfsantriebs 12 mittels der Recheneinrichtung 52, das daraus resultierende Antreiben der Fahrzeugräder 30 und 32 mittels des Hilfsantriebs 12, das daraus resultierende und relativ zu dem Zugfahrzeug 22 erfolgende Fahren des Anhängers 10 und das daraus resultierende Reduzieren des Abstands zwischen den Koppeleinrichtungen 18 und 20 automatisch erfolgen, das heißt durchgeführt werden. Sobald das Bedienelement nicht mehr bedient wird, das heißt sobald die Person, aus welchen Gründen auch immer, das Bedienelement nicht mehr bedient, werden auch das Antreiben des Fahrzeugräder 30 und 32 und somit das Fahren des Anhängers 10 mittels des Hilfsantriebs 12 beendet.

Um sicherzustellen, dass durch das Verfahren der Anhänger 10 (mit Ausnahme des Bedienens des Bedienelements durch die Person) automatisch in Richtung des Zugfahrzeugs 22 und nicht in Richtung eines anderen Fahrzeugs gefahren wird, ist es vorzugsweise vorgesehen, dass die elektronische Recheneinrichtung 52 das erkannte Kennzeichen 50 als Ist-Kennzeichen mit einem vorgegebenen Referenz-Kennzeichen vergleicht, und dass die elektronische Recheneinrichtung 52 den Hilfsantrieb 12 in Abhängigkeit von dem Vergleich des Ist-Kennzeichens mit dem Referenz-Kennzeichen ansteuert. Beispielsweise ermittelt die elektronische Recheneinrichtung das Referenz-Kennzeichen in Abhängigkeit von einer durch eine Person bewirkten Eingabe. Beispielsweise über eine Eingabeeinrichtung und dabei insbesondere über eine Bedienschnittstelle oder Bedienoberfläche der Eingabeeinrichtung kann die Person die genannte Eingabe durchführen. Beispielsweise stellt die Eingabeeinrichtung die Bedienoberfläche bereit. Bei der Eingabeeinrichtung handelt es sich beispielsweise um ein mobiles Endgerät, insbesondere um ein mobiles Telekommunikationsendgerät wie beispielsweise ein Mobiltelefon, d. h. ein Handy oder ein Smartphone. Durch die Eingabe gibt beispielsweise die Person das Referenz-Kennzeichen, welches vorliegend "M DN 6363" lautet, in die Eingabeeinrichtung ein. Die Eingabeeinrichtung stellt beispielsweise ein das eingegebene Referenz-Kennzeichen und ein die Eingabe charakterisierendes, insbesondere elektrisches, Signal bereit, welches beispielsweise von der elektronischen Recheneinrichtung 52 empfangen wird. Hierdurch ermittelt die elektronische Recheneinrichtung 52 das Referenz-Kennzeichen und somit die Eingabe. Insbesondere kann das Referenz-Kennzeichen zumindest vorübergehend in einem Speicher der elektronischen Recheneinrichtung gespeichert sein, wobei die elektronische Recheneinrichtung das Referenz-Kennzeichen aus dem Speicher abrufen und dadurch ermitteln kann. Bei dem in den Figuren gezeigten Ausführungsbeispiel stimmt das Kennzeichen 50 als Ist-Kennzeichen mit dem eingegebenen Referenz-Kennzeichen überein, was mittels der elektronischen Recheneinrichtung 52 durch den zuvor genannten Vergleich des Ist-Kennzeichens mit dem Referenz-Kennzeichen ermittelt wird oder wurde. Dies bedeutet, dass auch das Kennzeichen 50 des Zugfahrzeugs 22 "M DN 6363" lautet.

Ferner ist aus den Figuren erkennbar, dass es sich bei dem Kennzeichen 50 um ein auch als Kfz-Kennzeichen bezeichnetes Kennzeichen handelt, welches eine von einer Fahrzeug-Zulassungsbehörde eines Staates zugeteilte, individuelle und vorliegend alphanumerische Registrierungsbezeichnung wiedergibt. Diese Registrierungsbezeichnung lautet vorliegend "M DN 6363". Ist beispielsweise das Zugfahrzeug 22 in der Stadt München in dem Staat Deutschland zugelassen, so wurde die vorliegende Registrierungsbezeichnung "M DN 6363" von der Kraftfahrzeug-Zulassungsbehörde der Stadt München dem Zugfahrzeug 22 individuell zugeteilt. Somit kann die Verwendung einer speziell zum automatischen und relativ zu dem Zugfahrzeug 22 erfolgenden Fahren des Anhängers 10 an dem Zugfahrzeug 22 angebrachten Markierung vermieden werden. Somit kann der Anhänger 10 einfach und besonders komfortabel mit dem Zugfahrzeug 22 gekoppelt werden.

## Patentansprüche

1. Verfahren zum Betreiben eines Hilfsantriebs (12) eines Anhängers (10), bei welchem:
- mittels wenigstens einer Kamera (46) wenigstens ein Bild (54) einer in einer Umgebung (48) des Anhängers (10) angeordneten Markierung (50) eines in der Umgebung (48) des Anhängers (10) angeordneten Zugfahrzeugs (22) erfasst wird;
- mittels einer elektronischen Recheneinrichtung (52) das Bild (54) analysiert und dadurch die Merkierung (50) erkannt wird;
- mittels der elektronischen Recheneinrichtung (52) der Hilfsantrieb (12) in Abhängigkeit von der durch das Analysieren des Bilds (54) erkannten Markierung (50) angesteuert wird, wodurch der Hilfsantrieb (12) Fahrzeugräder (30, 32) des Anhängers (10) derart antreibt, dass der Anhänger (10) relativ zu dem Zugfahrzeug (22) gefahren wird, wodurch ein Abstand zwischen einer ersten Koppeleinrichtung (18) des Anhängers (10) und einer zweiten Koppeleinrichtung (20) des Zugfahrzeugs (22) zumindest reduziert wird.

2. Verfahren nach Anspruch 1,
**dadurch gekennzeichnet, dass**:
- die elektronische Recheneinrichtung (52) die erkannte Markierung (50) als Ist-Markierung mit einer vorgegebenen Referenz-Markierung vergleicht; und
- die elektronische Recheneinrichtung (52) den Hilfsantrieb (12) in Abhängigkeit von dem Vergleich der Ist-Markierung mit der Referenz-Markierung ansteuert.

3. Verfahren nach Anspruch 2,
**dadurch gekennzeichnet, dass**
die elektronische Recheneinrichtung (52) die Referenz-Markierung in Abhängigkeit von einer durch eine Person bewirkten Eingabe ermittelt.

4. Verfahren nach Anspruch 2 oder 3,
**dadurch gekennzeichnet, dass**
dann und nur dann mittels der elektronischen Recheneinrichtung (52) der Hilfsantrieb (12) in Abhängigkeit von der erkannten Markierung (50) derart angesteuert wird, dass der Hilfsantrieb (12) die Fahrzeugräder (30, 32) des Anhängers (10) derart antreibt, dass der Anhänger (10) relativ zu dem Zugfahrzeug (22) gefahren wird, um dadurch den Abstand zwischen der ersten Koppeleinrichtung (18) und der zweiten Koppeleinrichtung (20) zumindest zu reduzieren, wenn die elektronische Recheneinrichtung (52) durch den Vergleich der Ist-Markierung mit der Referenz-Markierung ermittelt, dass die Ist-Markierung mit der Referenz-Markierung übereinstimmt.

5. Verfahren nach einem der vorhergehenden Ansprüche,
**dadurch gekennzeichnet, dass**
als die elektronische Recheneinrichtung (52) eine elektronische Recheneinrichtung (52) des Anhängers (10) verwendet wird.

6. Verfahren nach einem der vorhergehenden Ansprüche,
**dadurch gekennzeichnet, dass**
als die Kamera (46) eine Kamera (46) des Anhängers (10) verwendet wird.

7. Verfahren nach einem der vorhergehenden Ansprüche,
**dadurch gekennzeichnet, dass**
als die Markierung (50) ein Kennzeichen (50) verwendet wird, welches eine von einer Fahrzeug-Zulassungsbehörde eines Staates zugeteilte individuelle Registrierungsbezeichnung wiedergibt.

8. Verfahren nach einem der vorhergehenden Ansprüche,
**dadurch gekennzeichnet, dass**
während mittels der elektronischen Recheneinrichtung (52) der Hilfsantrieb (12) in Abhängigkeit von der erkannten Markierung (50) derart angesteuert wird, dass der Hilfsantrieb (12) die Fahrzeugräder (30, 32) des Anhängers (10) derart antreibt, dass der Anhänger (10) relativ zu dem Zugfahrzeug (22) gefahren wird, um dadurch den Abstand zwischen der ersten Koppeleinrichtung (18) und der zweiten Koppeleinrichtung (20) zumindest zu reduzieren, mittels der Kamera (46) und/oder mittels wenigstens eines weiteren Umgebungssensors zumindest ein in der Umgebung (48) des Anhängers (10) angeordnetes, von dem Zugfahrzeug (22) unterschiedliches und zusätzlich zu dem Zugfahrzeug (22) vorgesehenes Objekt erfasst wird, wobei die elektronische Recheneinrichtung (52) den Hilfsantrieb (12) auch in Abhängigkeit von dem erfassten Objekt ansteuert, um eine Kollision des Anhängers (10) mit dem Objekt zu vermeiden.

9. Verfahren nach einem der vorhergehenden Ansprüche,
**dadurch gekennzeichnet, dass**
mittels der elektronischen Recheneinrichtung (52) der Hilfsantrieb (12) in Abhängigkeit von der erkannten Markierung (50) derart angesteuert wird, dass der Hilfsantrieb (12) die Fahrzeugräder (30, 32) des Anhängers (10) derart antreibt, dass der Anhänger (10) relativ zu dem Zugfahrzeug (22) gefahren wird, um dadurch den Abstand zwischen der ersten Koppeleinrichtung (18) und der zweiten Koppeleinrichtung (20) zumindest zu reduzieren, ohne dass das Ansteuern des Hilfsantriebs (12) von einem zusätzlichen, leitungslos von dem Anhänger (10) empfangenen Signal abhängt.

10. Verfahren nach einem der vorhergehenden Ansprüche,
**dadurch gekennzeichnet, dass**
durch das relativ zu dem Zugfahrzeug (22) erfolgende Fahren des Anhängers (10) der Abstand zwischen der ersten Koppeleinrichtung (18) und der zweiten Koppeleinrichtung (20) derart zumindest reduziert wird, dass nach dem relativ zu dem Zugfahrzeug (22) erfolgenden Fahren des Anhängers (10) die zweite Koppeleinrichtung (20) in zumindest eine Raumrichtung durch die erste Koppeleinrichtung (18) überlappt ist.
